# EUROPEAN PATENT APPLICATION

(11) **EP 4 525 290 A1**
(43) Date of publication of application: **19.03.2025**
(21) Application number: 23803046.4
(22) Date of filing: 12.05.2023
(51) Int. Cl.: H02M 3/335, H02M 7/483, H02M 7/487

(54) **DIRECT-CURRENT CONVERSION CIRCUIT, INVERTER, AND NEUTRAL-POINT BALANCING METHOD FOR INVERTER**

(30) Priority: 13.05.2022 CN 202210519822
(71) Applicant: Hoymiles Power Electronics Inc., Hangzhou, Zhejiang 310015 (CN)
(72) Inventor: WENG, Bingwen, Hangzhou, Zhejiang 310015 (CN); LIAO, Yafeng, Hangzhou, Zhejiang 310015 (CN); WU, Junxiong, Hangzhou, Zhejiang 310015 (CN)
(74) Representative: Bandpay & Greuter
(86) International application number: PCT/CN2023/094002
(87) International publication number: WO 2023/217278

(57) **Abstract**

This application provides a DC/DC conversion circuit, configured to provide direct-current conversion between a first direct-current voltage and a second direct-current voltage, including: a transformer, where the transformer includes a primary winding and a secondary winding, and the primary winding includes a center tap, and a first primary winding and a second primary winding respectively connected to the center tap; a primary circuit, where a first side of the primary circuit is connected to the primary winding, a second side of the primary circuit includes a first end, a second end, and a third end arranged between the first end and the second end, and the first direct-current voltage is provided between the first end and the second end of the primary circuit; and a secondary circuit, where a first side of the secondary circuit is connected to the secondary winding, and a second side of the secondary circuit provides the second direct-current voltage, where the third end of the primary circuit is connected to the center tap, to provide a current loop to balance a voltage between the first end and the third end of the primary circuit and a voltage between the second end and the third end of the primary circuit.

## Description

### CROSS-REFERENCE TO RELATED APPLICATIONS

This application claims priority to Chinese Patent Application No. CN202210519822.5, entitled "DC/DC CONVERSION CIRCUIT, INVERTER, AND METHOD FOR NEUTRAL POINT VOLTAGE BALANCING FOR INVERTER" filed on May 13, 2022, which is incorporated herein by reference in its entirety.

### TECHNICAL FIELD

The present invention relates to the field of power electronics, and in particular, to a DC/DC conversion circuit, an inverter, and a method for neutral point voltage balancing for an inverter.

### BACKGROUND

Over recent years, photovoltaic energy storage and the electric vehicle industry have developed rapidly, and more studies have been conducted on DC/DC conversion circuits. In some typical application scenarios, such as in an energy storage inverter, the DC/DC conversion circuit and a subsequent inverter circuit form a two-stage structure, where the DC/DC conversion circuit converts a low direct-current voltage of a battery into a high direct-current voltage, which is then converted into an alternating-current voltage by the inverter circuit and fed to a power grid. To reduce harmonic content and voltage stresses of switching devices, some inverter circuits use a three-level structure, such as a T-type three-level or neutral point clamped (NPC) three-level structure. Generally, the high direct-current voltage is divided by capacitors to generate a neutral point voltage.

However, in a practical circuit, inconsistent parameters of the capacitors or an external half-wave load may cause neutral point voltage shift. The neutral point voltage shift distorts output waveforms, reduces the capacitor lifespan, or even causes overvoltage in some components which damages a equipment.

Existing solutions for resolving the problem of neutral point voltage imbalance include a hardware solution and a software solution. The hardware solution is to add a neutral point balancing bridge, which is equivalent to a Buck/Boost circuit, and transfers energy from a high-voltage side to a low-voltage side when the neutral point voltage shifts. However, this solution requires additional power components and inductors, which reduces efficiency of the equipment, and increases costs of the equipment. The software solution is to balance the neutral point voltage by using a special control method, which is complex and difficult to implement.

### SUMMARY

To resolve the foregoing problems in the related art, this application proposes a DC/DC conversion circuit, an inverter, and a method for neutral point balancing for an inverter. A transformer of a DC/DC conversion circuit in the inverter has a center tap, which is connected to a neutral point of the inverter, to provide a current loop to balance a neutral point voltage of the inverter. This solution may achieve the balance of the neutral point voltage of the inverter without an additional balancing bridge or a complex control algorithm.

Based on an objective of the foregoing invention, this application provides a DC/DC conversion circuit, configured to provide direct-current conversion between a first direct-current voltage and a second direct-current voltage, including:
a transformer, where the transformer includes a primary winding and a secondary winding, and the primary winding includes a center tap, and a first primary winding and a second primary winding respectively connected to the center tap;
a primary circuit, where a first side of the primary circuit is connected to the primary winding, a second side of the primary circuit includes a first end, a second end, and a third end arranged between the first end and the second end, and the first direct-current voltage is provided between the first end and the second end of the primary circuit; and
a secondary circuit, where a first side of the secondary circuit is connected to the secondary winding, and a second side of the secondary circuit provides the second direct-current voltage, where
the third end of the primary circuit is connected to the center tap, to provide a current loop to balance a voltage between the first end and the third end of the primary circuit and a voltage between the second end and the third end of the primary circuit.

Further, the primary circuit includes a plurality of switching devices, a first current loop flowing through the first end and the third end of the primary circuit and the center tap, and a second current loop flowing through the center tap and the third end and the second end of the primary circuit are selectively provided by controlling switching of the switching devices, and a direction of the first current loop is opposite to a direction of the second current loop.

Further, the first primary winding and the second primary winding have a same number of turns.

Further, the primary circuit is a full-bridge structure or a half-bridge structure.

Further, the DC/DC conversion circuit further includes: a resonant tank, where the resonant tank includes a resonant capacitor, a first resonant inductor, and a second resonant inductor, where the resonant capacitor is connected between the secondary circuit and the secondary winding, and the first resonant inductor and the second resonant inductor are connected between the secondary circuit and the secondary winding or connected between the primary winding and the primary circuit.

Further, the secondary circuit is a full-bridge structure.

This application further provides an inverter, where the inverter includes a multi-level inverter circuit and the DC/DC conversion circuit as described above.

A direct-current side of the multi-level inverter circuit is electrically connected to a second side of a primary circuit of the DC/DC conversion circuit, and an alternating current side of the multi-level inverter circuit provides an alternating current output.

Further, the multi-level inverter circuit is a T-type multi-level inverter circuit or a diode-clamped multi-level inverter circuit.

Further, the inverter further includes a first voltage-dividing capacitor and a second voltage-dividing capacitor connected in series between the first end and the second end of the primary circuit, and a connection point between the first voltage-dividing capacitor and the second voltage-dividing capacitor is respectively connected to the center tap and a neutral point of the multi-level inverter circuit.

Further, the inverter is a three-phase inverter, including three multi-level inverter circuits.

This application further provides a method for neutral point balancing for an inverter, where the inverter includes the DC/DC conversion circuit as described above, and the method includes: connecting the center tap of the transformer of the DC/DC conversion circuit in the inverter to the neutral point of the inverter, and providing a current loop to balance a neutral point voltage of the inverter.

Details of one or more embodiments of this application are provided in the subsequent accompanying drawings and descriptions, so that other features, objectives, and advantages of this application are more concise and understandable.

### BRIEF DESCRIPTION OF THE DRAWINGS

To describe the technical solutions in embodiments of this application more clearly, the following briefly introduces the accompanying drawings required for describing the embodiments or the related art. Apparently, the accompanying drawings in the following description show only embodiments of this application, and a person of ordinary skill in the art may still derive other accompanying drawings from the disclosed accompanying drawings without creative efforts.
FIG. 1 is a schematic diagram of a DC/DC conversion circuit according to an embodiment of this application;
FIG. 2 is a schematic diagram of a control signal of a switching device of a primary circuit of a DC/DC conversion circuit according to an embodiment of this application;
FIG. 3 is a schematic diagram of a current loop when a primary circuit of a DC/DC conversion circuit is in a first working mode according to an embodiment of this application;
FIG. 4 is an equivalent circuit diagram when a primary circuit of a DC/DC conversion circuit is in a first working mode according to an embodiment of this application;
FIG. 5 is a schematic diagram of a current loop when a primary circuit of a DC/DC conversion circuit is in a second working mode according to an embodiment of this application;
FIG. 6 is an equivalent circuit diagram when a primary circuit of a DC/DC conversion circuit is in a second working mode according to an embodiment of this application;
FIG. 7 is a schematic diagram of an inverter according to an embodiment of this application;
FIG. 8 is a schematic diagram of an inverter according to another embodiment of this application;
FIG. 9 is a schematic diagram of an inverter according to still another embodiment of this application; and
FIG. 10 is a schematic diagram of an inverter according to yet still another embodiment of this application.

### DETAILED DESCRIPTION

To enable a reader to better understand a design purpose of the present invention, the following specific embodiments are provided, so that the reader can vividly understand a structure, structural composition, a functional principle, and technical effects of the present invention. However, it should be noted that, the following embodiments are not intended to limit a technical solution of the present invention. While analyzing and understanding the embodiments, a person skilled in the art may make a series of modifications and equivalent replacement to the technical solution provided in the present invention with reference to existing knowledge. A new technical solution derived from the modifications and equivalent replacement is also included in the present invention.

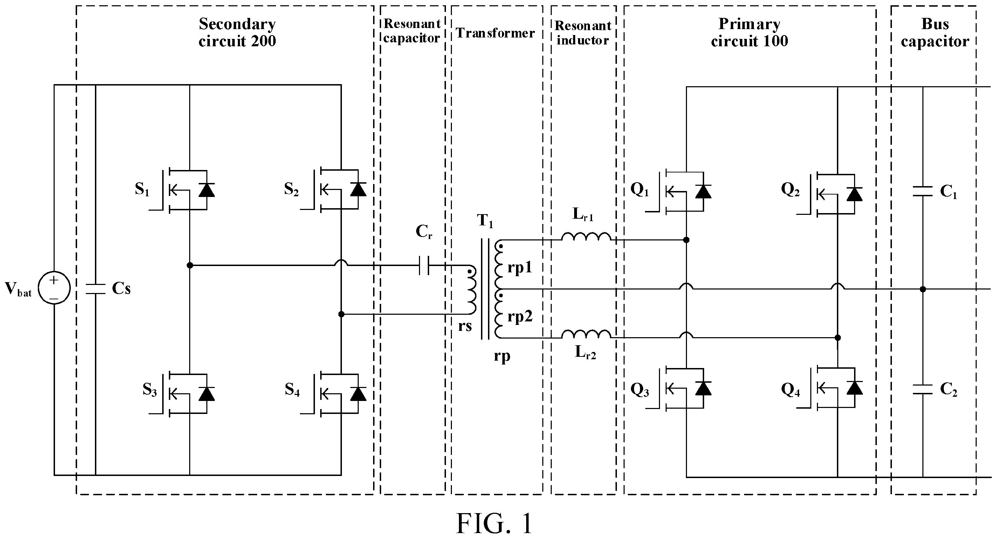

FIG. 1 is a schematic diagram of a DC/DC conversion circuit according to this application. The DC/DC conversion circuit includes:
a transformer T₁, where the transformer T₁ includes a primary winding rp and a secondary winding rs, and the primary winding rp includes a center tap, and a first primary winding rp 1 and a second primary winding rp2 respectively connected to the center tap;
a primary circuit 100, where a first side of the primary circuit 100 is connected to the primary winding rp, a second side of the primary circuit 100 includes a first end, a second end, and a third end arranged between the first end and the second end, and the first direct-current voltage is provided between the first end and the second end of the primary circuit 100; and
a secondary circuit 200, where a first side of the secondary circuit 200 is connected to the secondary winding rs, and a second side of the secondary circuit 200 provides the second direct-current voltage V_{bat}, where
the third end of the primary circuit 100 is connected to the center tap, to provide a current loop to balance a voltage between the first end and the third end of the primary circuit 100 and a voltage between the second end and the third end of the primary circuit.

The primary circuit 100 includes a plurality of switching devices, a first current loop flowing through the first end and the third end of the primary circuit 100 and the center tap, and a second current loop flowing through the center tap and the third end and the second end of the primary circuit 100 are selectively provided by controlling switching of the switching devices, and a direction of the first current loop is opposite to a direction of the second current loop.

The first primary winding rp1 and the second primary winding rp2 have a same number of turns.

As an optional implementation, as shown in FIG. 1, the primary circuit includes a first full bridge. The first full bridge includes a first bridge arm and a second bridge arm connected in parallel between the first end and the second end of the primary circuit 100.

The first bridge arm includes a first switching device Q₁ and a third switching device Q₃ connected in series. A connection point between the first switching device Q₁ and the third switching device Q₃ is used as a midpoint of the first bridge arm and is connected to one end of the first primary winding rp1.

The second bridge arm includes a second switching device Q₂ and a fourth switching device Q₄ connected in series. A connection point between the second switching device Q₂ and the fourth switching device Q₄ is used as a midpoint of the second bridge arm and is connected to one end of the second primary winding rp2. The other end of the first primary winding rp1 and the other end of the second primary winding rp2 are connected to the center tap.

The first switching device Q₁ to the fourth switching device Q₄ may be MOS transistors or IGBTs. Specifically, the MOS transistor is used as an example in this application. As shown in FIG. 1, a drain of the first switching device Q₁ is connected to a drain of the second switching device Q₂. A source of the first switching device Q₁ is connected to a drain of the third switching device Q₃, and a connection point is used as the midpoint of the first bridge arm. A source of the second switching device Q₂ is connected to a drain of the fourth switching device Q₄, and a connection point is used as the midpoint of the second bridge arm. A source of the third switching device Q₃ is connected to a source of the fourth switching device Q₄.

Further, in the embodiments of this application, the second side of the primary circuit 100 is electrically connected to a bus capacitor. The bus capacitor includes a first voltage-dividing capacitor C₁ and a second voltage-dividing capacitor C₂. The first voltage-dividing capacitor C₁ and the second voltage-dividing capacitor C₂ are connected in series between the first end and the second end of the primary circuit 100. A connection point between the first voltage-dividing capacitor C₁ and the second voltage-dividing capacitor C₂ is a neutral point of a direct-current bus, and is connected to the center tap of the primary winding rp of the transformer T₁. The first voltage-dividing capacitor C₁ and the second voltage-dividing capacitor C₂ have a same capacitance and a same parameter.

Further, by selectively controlling the first switching device Q₁ or the fourth switching device Q₄ to be turned on, a first current loop flowing through the first primary winding rp1, the first switching device Q₁, and the first voltage-dividing capacitor C₁, and a second current loop flowing through the second primary winding rp2, the fourth switching device Q₄, and the second voltage-dividing capacitor C₂ are provided.

As an optional implementation, by selectively controlling the second switching device Q₂ or the third switching device Q₃ to be turned on, a second current loop flowing through the first primary winding rp1, the third switching device Q₃, and the second voltage-dividing capacitor C₂, and a first current loop flowing through the second primary winding rp2, the second switching device Q₂, and the first voltage-dividing capacitor C₁ are provided.

If a voltage on the third end shifts, that is, a voltage across the first voltage-dividing capacitor C₁ and a voltage across the second voltage-dividing capacitor C₂ are different. The difference between the voltage across the first voltage-dividing capacitor C₁ and the voltage across the second voltage-dividing capacitor C₂, resulting in a current value of the first current loop and a current value of the second current loop are different. A difference current between the two currents flows through the center tap of the transformer T₁, and charges or discharges the first voltage-dividing capacitor C₁ and the second voltage-dividing capacitor C₂, so that the difference between the voltage across the first voltage-dividing capacitor C₁ and the voltage across the second voltage-dividing capacitor C₂ gradually decreases, until the voltage across the first voltage-dividing capacitor C₁ and the voltage across the second voltage-dividing capacitor C₂ are equal. Finally, the voltage between the first end and the second end of the primary circuit 100 and the voltage between the second end and the third end of the primary circuit 100 reach a balance.

As an optional implementation, the second switching device Q₂ and the third switching device Q₃ or the first switching device Q₁ and the fourth switching device Q₄ may be replaced by diodes or the like.

As an optional implementation, the primary circuit 100 may be a half-bridge structure.

As an optional implementation, as shown in FIG. 1, the secondary circuit 200 includes a second full bridge and a voltage stabilizing capacitor C_{S}. The second full bridge includes a third bridge arm and a fourth bridge arm connected in parallel. The third bridge arm includes a fifth switching device S₁ and a seventh switching device S₃, and the fourth bridge arm includes a sixth switching device S₂ and an eighth switching device S₄ connected in series. A connection point between the fifth switching device S₁ and the seventh switching device S₃ is used as a midpoint of the third bridge arm and is connected to one end of the secondary winding rs. A connection point between the sixth switching device S₂ and the eighth switching device S₄ is used as a midpoint of the fourth bridge arm and is connected to the other end of the secondary winding rs.

The fifth switching device S₁ to the eighth switching device S₄ are MOS transistors or IGBTs. The MOS transistor is used as an example in this application. A drain of the fifth switching device S₁ is connected to a drain of the sixth switching device S₂, and a source of the fifth switching device S₁ is connected to a drain of the seventh switching device S₃. A source of the sixth switching device S₂ is connected to a drain of the eighth switching device S₄, and a source of the seventh switching device S₃ is connected to a source of the eighth switching device S₄.

The voltage stabilizing capacitor C_{S} is connected in parallel with the third bridge arm, and is configured to stabilize the second direct-current voltage V_{bat} provided on the second side of the secondary circuit 200.

In this embodiment, by controlling switching of switching devices in the primary circuit 100 and the secondary circuit 200, the direct-current conversion is implemented while balancing the voltage between the first end and the third end of the primary circuit 100 and the voltage between the second end and the third end of the primary circuit 100. This prevents a neutral point voltage shift caused by inconsistent parameters of the capacitors or an external half-wave load, which distorts the output waveforms, reduces the capacitor lifespan and causes overvoltage in some components which damages the equipment.

As an optional implementation, as shown in FIG. 1, the DC/DC conversion circuit further includes a resonant tank. The resonant tank includes a resonant capacitor Cᵣ and a resonant inductor, and the resonant inductor includes a first resonant inductor Lᵣ₁ and a second resonant inductor Lᵣ₂.

The resonant capacitor Cᵣ is connected between the secondary circuit 200 and the secondary winding rs, and the first resonant inductor Lᵣ₁ and the second resonant inductor Lᵣ₂ are connected between the primary winding rp and the primary circuit 100. Specifically, one end of the first resonant inductor Lᵣ₁ is connected to the midpoint of the first bridge arm, and the other end of the first resonant inductor Lᵣ₁ is connected to one end of the first primary winding rp1. One end of the second resonant inductor Lᵣ₂ is connected to the midpoint of the second bridge arm, and the other end of the second resonant inductor Lᵣ₂ is connected to one end of the second primary winding rp2.

As an optional implementation, the resonant inductors also can be arranged between the secondary circuit 200 and the secondary winding rs.

An example in which the DC/DC conversion circuit is a bidirectional dual active bridge circuit is used below to describe a working principle of the present invention. Various existing control methods may be used to control the dual active bridge circuit, such as a dual phase-shifting control technology. This is not described herein again.

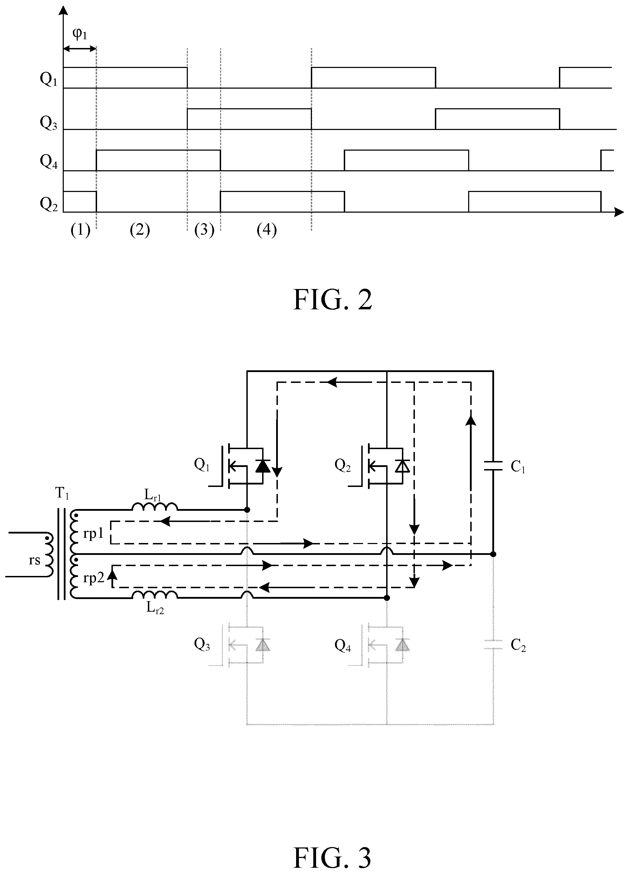

The bidirectional dual active bridge circuit may work in a boost mode in which power is transferred from a secondary side to a primary side and a buck mode in which power is transferred from the primary side to the secondary side. In this embodiment, an example in which the dual active bridge circuit works in the buck mode in which the power is transferred from the primary side to the secondary side is used. As an optional implementation, control signals of switching devices in the primary circuit 100 are shown in FIG. 2. The first switching device Q₁ and the third switching device Q₃ are complementarily turned on, and the second switching device Q₂ and the fourth switching device Q₄ are complementarily turned on. There is a phase shift angle Φ₁ between on signals of the first switching device Q₁ and the fourth switching device Q₄, as well as between on signals of the second switching device Q₂ and the third switching device Q₃.

It may be learnt from the foregoing that, the primary circuit 100 includes four working modes, which are described with reference to FIG. 3 to FIG. 6.

FIG. 3 shows a first working mode of a primary circuit according to an embodiment of this application. In a first working mode, a first switching device Q₁ and a second switching device Q₂ are in an on state, and a third switching device Q₃ and a fourth switching device Q₄ are in an off state. In this case, the primary circuit 100 is freewheeling, and a first voltage-dividing capacitor C₁ is discharged, a current loop in the primary circuit 100 is shown in FIG. 3, which includes a third current loop sequentially flowing through the first voltage-dividing capacitor C₁, the first switching device Q₁, a first resonant inductor Lᵣ₁, and a first primary winding rp1, and a fourth current loop sequentially flowing through the first voltage-dividing capacitor C₁, the second switching device Q₂, a second resonant inductor Lᵣ₂, and a second primary winding rp2. A direction of the third current loop is the same as a direction of the fourth current loop.

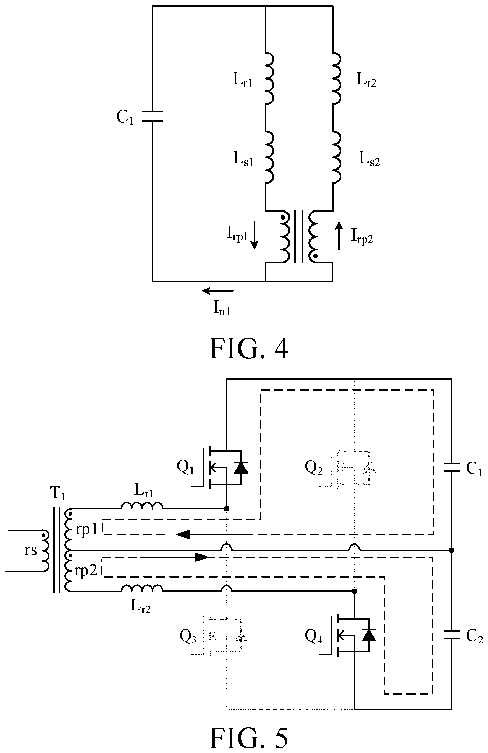

FIG. 4 shows an equivalent circuit diagram of a primary circuit in a first working mode. Iᵣₚ₁ is a current flowing through a first primary winding rp1, Iᵣₚ₂ is a current flowing through a second primary winding rp2, Iₙ₁ is a difference current between the current Iᵣₚ₁ and the current Iᵣₚ₂, and directions of arrows indicate reference directions of the currents. In the first working mode, the primary circuit 100 is equivalent to a case in which a first switching device Q₁ is connected in series with a first resonant inductor Lᵣ₁ and then connected in parallel with a first voltage-dividing capacitor C₁, and a second switching device Q₂ is connected in series with a second resonant inductor Lᵣ₂ and then connected in parallel with the first voltage-dividing capacitor C₁. A secondary winding rs is converted to the primary side, and its equivalent inductors correspond to the third current loop and the fourth current loop are Lₛ₁ and Lₛ₂ respectively. Specifically, one end of the first resonant inductor Lᵣ₁ is connected to one end of the first voltage-dividing capacitor C₁, and the other end of the first resonant inductor Lᵣ₁ is connected to a dotted end of the first primary winding rp1 through the equivalent inductor Lₛ₁. A non-dotted end of the first primary winding rp1 is connected to the other end of the first voltage-dividing capacitor C₁. One end of the second resonant inductor Lᵣ₂ is connected to one end of the first voltage-dividing capacitor C₁, and the other end of the second resonant inductor Lᵣ₂ is connected to a non-dotted end of the second primary winding rp2 through the equivalent inductor Lₛ₂. A dotted end of the second primary winding rp2 is connected to the other end of the first voltage-dividing capacitor C₁.

FIG. 5 shows a second working mode of a primary circuit according to an embodiment of this application. In the second working mode, a first switching device Q₁ and a fourth switching device Q₄ are in an on state, and a second switching device Q₂ and a third switching device Q₃ are in an off state. A current loop in the primary circuit 100 is shown in FIG. 5, which includes a first current loop sequentially flowing through a first primary winding rp1, a first resonant inductor Lᵣ₁, the first switching device Q₁, and a first voltage-dividing capacitor C₁, and a second current loop flowing through a second primary winding rp2, a second voltage-dividing capacitor C₂, the fourth switching device Q₄, and a second resonant inductor Lᵣ₂.

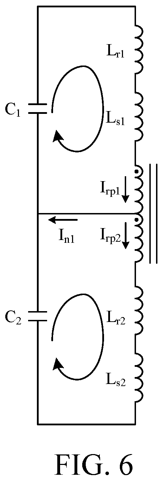

FIG. 6 shows an equivalent circuit diagram of a primary circuit in a second working mode. Iᵣₚ₁ is a current flowing through a first primary winding rp1, Iᵣₚ₂ is a current flowing through a second primary winding rp2, Iₙ₁ is a difference current between the current Iᵣₚ₁ and the current Iᵣₚ₂, and directions of arrows indicate reference directions of the currents. In the second working mode, one end of a first resonant inductor Lᵣ₁ is connected to one end of a first voltage-dividing capacitor C₁, and the other end of the first resonant inductor Lᵣ₁ is connected to a dotted end of the first primary winding rp1 through an equivalent inductor Lₛ₁. A non-dotted end of the first primary winding rp1 is connected to the other end of the first voltage-dividing capacitor C₁. One end of a second resonant inductor Lᵣ₂ is connected to a non-dotted end of the second primary winding rp2, and the other end of the second resonant inductor Lᵣ₂ is connected to one end of a second voltage-dividing capacitor C₂ through an equivalent inductor Lₛ₂. The other end of the second voltage-dividing capacitor C₂ is connected to a dotted end of the second primary winding rp2.

The primary circuit provided in the embodiments of this application further includes a third working mode. In the third working mode, a third switching device Q₃ and a fourth switching device Q₄ of the primary circuit are turned on, and a first switching device Q₁ and a second switching device Q₂ are turned off. The third working mode is symmetrical to the first working mode, details are not described herein again.

The primary circuit provided in the embodiments of this application further includes a fourth working mode. In the fourth working mode, the second switching device Q₂ and the third switching device Q₃ of the primary circuit are turned on, and the first switching device Q₁ and the fourth switching device Q₄ of the primary circuit are turned off. The fourth working mode is symmetrical to the second working mode, details are not described herein again.

According to above analysis, when the voltage on a third end of a primary circuit in a dual active bridge circuit provided in the embodiments of this application shifts, the voltage balancing can be achieved by the following method.

When the primary circuit 100 works in the second working mode or the fourth working mode, if the voltage across the first voltage-dividing capacitor C₁ is not equal to the voltage across the second voltage-dividing capacitor C₂, for example, the voltage across the first voltage-dividing capacitor C₁ is greater than the voltage across the second voltage-dividing capacitor C₂. the current of the first current loop is greater than the current of the second current loop, and the difference current between the two current loops flows through the center tap of the primary winding rp of the transformer T₁, the first voltage-dividing capacitor C₁ is discharged, and the second voltage-dividing capacitor C₂ is charged, so that the difference between the voltages of the first voltage-dividing capacitor C₁ and the second voltage-dividing capacitor C₂ gradually decreases, until the voltages of the two capacitors tend to be equal, thereby achieving the neutral point voltage balancing. Similarly, when the voltage across the second voltage-dividing capacitor C₂ is greater than the voltage across the first voltage-dividing capacitor C₁, the second voltage-dividing capacitor C₂ is discharged, and the first voltage-dividing capacitor C₁ is charged, so that the difference between the voltages of the second voltage-dividing capacitor C₂ and the first voltage-dividing capacitor C₁ gradually decreases, until the voltages of the two capacitors tend to be equal.

In summary, this application proposes a DC/DC conversion circuit. The primary winding of the transformer of the DC/DC conversion circuit has a center tap. The center tap is connected to a neutral point of the direct-current bus. When the neutral point voltage of the direct-current bus on the direct-current side of the DC/DC conversion circuit shifts, the neutral point voltage can be adjusted to achieve balance. This solution does not require adding an additional component or a complex control method, and has a good practical value.

As an optional implementation, the embodiments of this application further provide an inverter, where the inverter includes the DC/DC conversion circuit as described above and a multi-level inverter circuit 300.

A direct-current side of the multi-level inverter circuit 300 is electrically connected to a second side of a primary circuit of the DC/DC conversion circuit, for example, through a direct-current bus, and an alternating current side of the multi-level inverter circuit, for example, is connected to an alternating current power grid, provides an alternating current output.

Further, the inverter further includes a bus capacitor, which is connected between the direct-current bus, and a neutral point of the direct-current bus is connected to a neutral point of the multi-level inverter circuit.

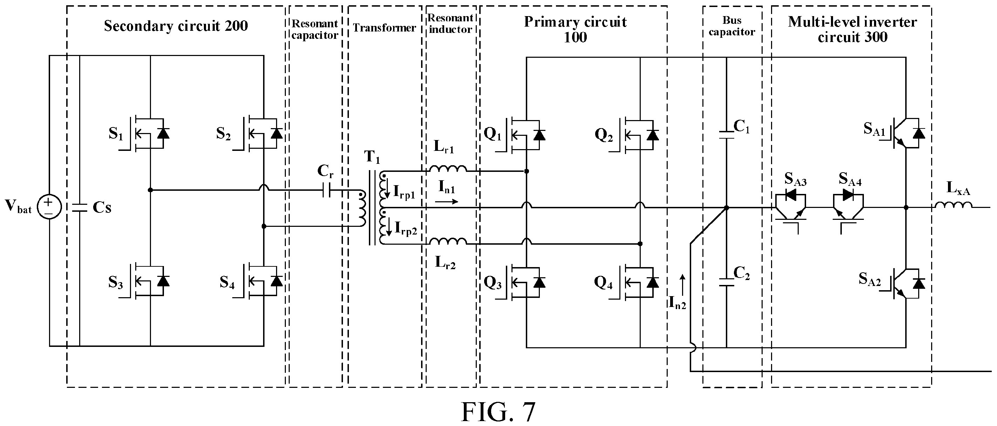

FIG. 7 is a schematic diagram of an inverter according to an implementation of this application. A multi-level inverter circuit 300 is a T-type three-level inverter circuit, and includes four switching devices. A first switching device S_{A1} and a second switching device S_{A2} are connected in series and are connected between a first end and a second end of a primary circuit 100. A connection point between the first switching device S_{A1} and the second switching device S_{A2} is used as a first output end of the multi-level inverter circuit 300, and, for example, is connected to an alternating current power grid through an inverter inductor L_{XA}. A third switching device S_{A3} and a fourth switching device S_{A4} are connected in anti-series. A first end of the third switching device S_{A3} is connected to a third end of the primary circuit 100 and is used as a second output end of the multi-level inverter circuit 300, for example, is connected to a neutral wire of the alternating current power grid. A second end of the third switching device S_{A3} is connected to a second end of the fourth switching device S_{A4}, and a first end of the fourth switching device S_{A4} is connected to the connection point between the first switching device S_{A1} and the second switching device S_{A2}. An alternating current output is provided between and the first output end and the second output end of the multi-level inverter circuit 300.

Specifically, in the embodiments of this application, each switching device includes an IGBT and a freewheeling diode connected in anti-parallel with the IGBT. The first switching device S_{A1} is used as an example, which includes a first IGBT and a first freewheeling diode. A collector of the first IGBT is connected to a cathode of the first freewheeling diode, and an emitter of the first IGBT is connected to an anode of the first freewheeling diode.

According to the foregoing analysis, it may be learnt that, when parameters of the capacitor are inconsistent, or there is an external half-wave load, causing a neutral point voltage shift of the inverter, a current loop between the neutral point of the direct-current bus of the inverter and the center tap of the transformer T1 can balance the neutral point voltage of the direct-current bus, to prevent output waveforms from being distorted, the capacitor lifespan from being reduced, and overvoltage in some components which damages the equipment.

Further, the inverter in the embodiments of this invention multiplexes a DC/DC conversion circuit, which can implement direct-current conversion and balance the neutral point voltage when direct-current conversion is performed without an additional balancing bridge or a complex control algorithm. This reduces costs and control difficulty.

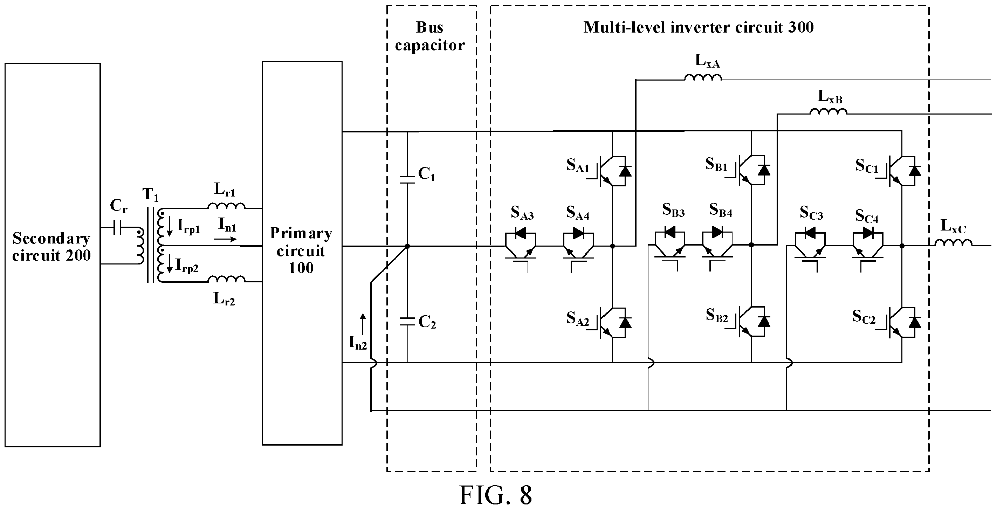

FIG. 8 is a schematic diagram of an inverter according to another implementation of this application. A multi-level inverter circuit 300 is a three-phase inverter circuit, which includes three T-type three-level inverter circuits. The T-type three-level inverter circuit in this implementation is similar to that in a previous implementation and is not described herein again.

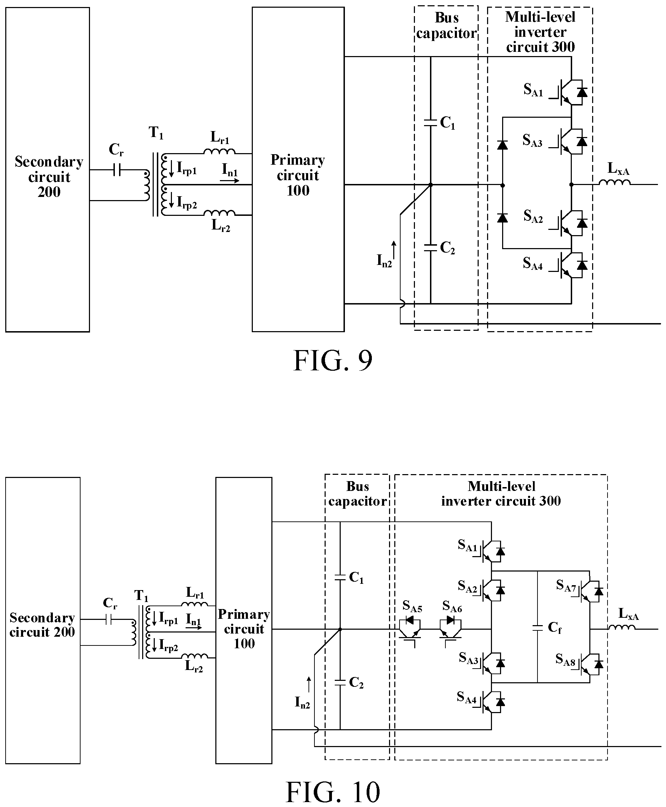

FIG. 9 is a schematic diagram of an inverter according to still another implementation of this application. A multi-level inverter circuit 300 is a diode-clamped three-level inverter circuit, which includes two clamping diodes and a first switching device S_{A1} to a fourth switching device S_{A4} connected in series between the first end and the second end of the primary circuit 100. The first switching device S_{A1} and the third switching device S_{A3} are connected in series to form a positive half-bridge arm, and the second switching device S_{A2} and the fourth switching device S_{A4} are connected in series to form a negative half-bridge arm. A connection point between the positive half-bridge arm and the negative half-bridge arm is used as a first output end of the multi-level inverter circuit 300. The two clamping diodes are connected in series and then are connected between switching devices in the positive half-bridge arm and switching devices in the negative half-bridge arm for clamping. A connection point between the two clamping diodes is connected to the third end of the primary circuit 100 and is used as a second output end of the multi-level inverter circuit 300. An alternating current output is provided between the first output end and the second output end of the multi-level inverter circuit 300.

FIG. 10 is a schematic diagram of an inverter according to yet still another implementation of this application. A multi-level inverter circuit 300 is a five-level inverter circuit, which includes eight switching devices and one clamping capacitor C_{f}.

A first switching device S_{A1} to a fourth switching device S_{A4} are connected in series and are connected between a first end and a second end of a primary circuit 100, and a fifth switching device S_{A5} and a sixth switching device S_{A6} are connected in anti-series. A first end of the fifth switching device S_{A5} is connected to a third end of the primary circuit 100, and as a first output end of the multi-level inverter circuit 300, a second end of the fifth switching device S_{A5} is connected to a second end of the sixth switching device S_{A6}. A first end of the sixth switching device S_{A6} is connected to a connection point between the second switching device S_{A2} and the third switching device S_{A3}.

A first end of the clamping capacitor C_{f} is connected to a connection point between the first switching device S_{A1} and the second switching device S_{A2}, and a second end of the clamping capacitor C_{f} is connected to a connection point between the third switching device S_{A3} and the fourth switching device S_{A4}. A seventh switching device S_{A7} and an eighth switching device S_{A8} are connected in series and then connected in parallel with the clamping capacitor C_{f}. A connection point between the seventh switching device S_{A7} and the eighth switching device S_{A8} is used as a second output end of the multi-level inverter circuit 300. An alternating current output is provided between the first output end and the second output end of the multi-level inverter circuit 300.

In summary, the embodiments of this application provide an inverter, including a DC/DC conversion circuit and a multi-level inverter circuit. A primary winding of a transformer of the DC/DC conversion circuit has a center tap, and the center tap is connected to a neutral point of a direct-current bus. The inverter in the present invention multiplexes the DC/DC conversion circuit, which implements direct-current conversion and balances the neutral point voltage the same time without an additional balancing bridge or a complex control algorithm. This reduces costs and control difficulty, and also has the advantages of reducing harmonic content that multi-level inverter circuits have.

As an optional implementation, the embodiments of this application further provide a method for neutral point balancing for an inverter, where the inverter includes the DC/DC conversion circuit as described above, and the method includes: connecting the center tap of the transformer of the DC/DC conversion circuit in the inverter to the neutral point of the inverter, and providing a current loop to balance a neutral point voltage of the inverter. The neutral point voltage balancing can be achieved without an additional balancing bridge or a complex control algorithm. This reduces costs and control difficulty.

It should be understood that, a person of ordinary skill in the art may make improvements or variations according to the foregoing descriptions, and such improvements and variations shall all fall within the protection scope of the appended claims of the present invention. Accompanying drawings corresponding to specific implementations are provided to assist understanding, making it easier for a reader to fully understand abstract generic terms of technical concepts involved in the present invention by understanding concrete terms. When comprehensively understanding the present disclosure and comparing it with technical solutions other than those provided by the present invention, appearance of the accompanying drawings should not be used as the only reference basis. After the concept of the present invention is understood, a series of modifications, equivalent replacement, blending of features, deletion and reorganization of non-essential technical features, proper addition and reorganization of non-essential technical features common in the related art, and the like made in accordance with the accompanying drawings or not in accordance with the accompanying drawings should be understood as being included within the spirit of the present invention.

## Claims

1. A DC/DC conversion circuit, configured to provide direct-current conversion between a first direct-current voltage and a second direct-current voltage, comprising:
a transformer, wherein the transformer comprises a primary winding and a secondary winding, and the primary winding comprises a center tap, and a first primary winding and a second primary winding respectively connected to the center tap;
a primary circuit, wherein a first side of the primary circuit is connected to the primary winding, a second side of the primary circuit comprises a first end, a second end, and a third end arranged between the first end and the second end, and the first direct-current voltage is provided between the first end and the second end of the primary circuit; and
a secondary circuit, wherein a first side of the secondary circuit is connected to the secondary winding, and a second side of the secondary circuit provides the second direct-current voltage, wherein
the third end of the primary circuit is connected to the center tap, to provide a current loop to balance a voltage between the first end and the third end of the primary circuit and a voltage between the second end and the third end of the primary circuit.

2. The DC/DC conversion circuit according to claim 1, wherein
the primary circuit comprises a plurality of switching devices, a first current loop flowing through the first end and the third end of the primary circuit and the center tap, and a second current loop flowing through the center tap and the third end and the second end of the primary circuit are selectively provided by controlling switching of the switching devices, and a direction of the first current loop is opposite to a direction of the second current loop.

3. The DC/DC conversion circuit according to claim 1, wherein
the first primary winding and the second primary winding have a same number of turns.

4. The DC/DC conversion circuit according to claim 1, wherein the primary circuit is a full-bridge structure or a half-bridge structure, the secondary circuit is a full-bridge structure.

5. The DC/DC conversion circuit according to claim 1, further comprising:
a resonant tank, wherein the resonant tank comprises a resonant capacitor, a first resonant inductor, and a second resonant inductor, wherein the resonant capacitor is connected between the secondary circuit and the secondary winding, and the first resonant inductor and the second resonant inductor are connected between the secondary circuit and the secondary winding or connected between the primary winding and the primary circuit.

6. The DC/DC conversion circuit according to claim 1, wherein the secondary circuit is a full-bridge structure.

7. An inverter, wherein the inverter comprises a multi-level inverter circuit and a DC/DC conversion circuit, a direct-current side of the multi-level inverter circuit is electrically connected to a second side of a primary circuit of the DC/DC conversion circuit, and an alternating current side of the multi-level inverter circuit provides an alternating current output; and
the DC/DC conversion circuit is configured to provide direct-current conversion between a first direct-current voltage and a second direct-current voltage, and the DC/DC conversion circuit comprises:
a transformer, wherein the transformer comprises the primary winding and a secondary winding, and the primary winding comprises a center tap, and a first primary winding and a second primary winding respectively connected to the center tap;
a primary circuit, wherein a first side of the primary circuit is connected to the primary winding, a second side of the primary circuit comprises a first end, a second end, and a third end arranged between the first end and the second end, and the first direct-current voltage is provided between the first end and the second end of the primary circuit; and
a secondary circuit, wherein a first side of the secondary circuit is connected to the secondary winding, and a second side of the secondary circuit provides the second direct-current voltage, wherein
the third end of the primary circuit is connected to the center tap, to provide a current loop to balance a voltage between the first end and the third end of the primary circuit and a voltage between the second end and the third end of the primary circuit.

8. The inverter according to claim 7, wherein the multi-level inverter circuit is a T-type multi-level inverter circuit or a diode-clamped multi-level inverter circuit.

9. The inverter according to claim 7, wherein the inverter further comprises a first voltage-dividing capacitor and a second voltage-dividing capacitor connected in series between the first end and the second end of the primary circuit, and a connection point between the first voltage-dividing capacitor and the second voltage-dividing capacitor is connected to the center tap and a neutral point of the multi-level inverter circuit.

10. The inverter according to claim 7, wherein the inverter is a three-phase inverter, comprising three multi-level inverter circuits.

11. The inverter according to claim 7, wherein
the primary circuit comprises a plurality of switching devices, a first current loop flowing through the first end and the third end of the primary circuit and the center tap, and a second current loop flowing through the center tap and the third end and the second end of the primary circuit are selectively provided by controlling switching of the switching devices, and a direction of the first current loop is opposite to a direction of the second current loop.

12. The inverter according to claim 7, wherein
the first primary winding and the second primary winding have a same number of turns.

13. The inverter according to claim 7, wherein the primary circuit is a full-bridge structure or a half-bridge structure.

14. The inverter according to claim 7, wherein the DC/DC conversion circuit further comprises:
a resonant tank, wherein the resonant tank comprises a resonant capacitor, a first resonant inductor, and a second resonant inductor, wherein the resonant capacitor is connected between the secondary circuit and the secondary winding, and the first resonant inductor and the second resonant inductor are connected between the secondary circuit and the secondary winding or connected between the primary winding and the primary circuit.

15. The inverter according to claim 7, wherein the secondary circuit is a full-bridge structure.

16. A method for neutral point balancing for an inverter, wherein the inverter comprises the DC/DC conversion circuit according to any one of claims 1 to 6, and the method comprises: connecting the center tap of the transformer of the DC/DC conversion circuit in the inverter to the neutral point of the inverter, and providing a current loop to balance a neutral point voltage of the inverter.
